(19) Europäisches Patentamt
European Patent Office
Office européen des brevets

(11) **EP 1 907 799 B1**

(12) **EUROPÄISCHE PATENTSCHRIFT**

(45) Veröffentlichungstag und Bekanntmachung des Hinweises auf die Patenterteilung:
**19.09.2018  Patentblatt 2018/38**

(21) Anmeldenummer: **06777286.3**

(22) Anmeldetag: **08.06.2006**

(51) Int Cl.:
***G01D 5/245*** *(2006.01)*

(86) Internationale Anmeldenummer:
**PCT/EP2006/062998**

(87) Internationale Veröffentlichungsnummer:
**WO 2007/009842 (25.01.2007 Gazette 2007/04)**

(54) **VERFAHREN ZUR AUSWERTUNG VON PHASENSIGNALEN MIT VERVIELFACHTER FEHLERTOLERANZ**

HIGHLY FAULT-TOLERANT METHOD FOR EVALUATING PHASE SIGNALS

PROCEDE POUR ANALYSER DES SIGNAUX DE MISE EN PHASE AVEC UNE TOLERANCE D'ERREUR MULTIPLIEE

(84) Benannte Vertragsstaaten:
**DE FR GB IT**

(30) Priorität: **18.07.2005  DE 102005033402**

(43) Veröffentlichungstag der Anmeldung:
**09.04.2008  Patentblatt 2008/15**

(73) Patentinhaber: **ROBERT BOSCH GMBH**
**70442 Stuttgart (DE)**

(72) Erfinder:
• **STEINLECHNER, Siegbert**
**71229 Leonberg (DE)**
• **WENZLER, Axel**
**71229 Leonberg (DE)**

(56) Entgegenhaltungen:
WO-A-03/004974      DE-A1- 10 142 449
DE-A1- 19 506 938      DE-B3- 10 247 321

**Beschreibung**

Technisches Gebiet:

Die Erfindung betrifft ein modifiziertes Noniusverfahren zur Bestimmung einer physikalischen Größe Φ gemäß dem Oberbegriff des Anspruchs 1, sowie eine Schaltungsanordnung zur Durchführung des Verfahrens gemäß Anspruch 5.

Stand der Technik;

Bei einigen technischen Messaufgaben entstehen zwei oder mehrere Phasenmesswerte, aus denen die zu messende physikalische Größe, wie beispielsweise ein Winkel oder ein Abstand zu einem Ziel zu bestimmen ist. Diese Phasensignale durchlaufen dabei über einem Eindeutigkeitsbereich E der zu messenden Größe mehrere Perioden, weisen also selbst innerhalb des Eindeutigkeitsbereichs E der zu messenden Größe eine Mehrdeutigkeit auf. Die Anzahl der Perioden des Phasensignals $\alpha_1$ im Eindeutigkeitsbereich E wird als Periodizität $n_i$ bezeichnet; dabei durchläuft der Index i die Werte von 1 bis $m$, wenn $m$ die Anzahl der Phasensignale ist. Der mathematische Zusammenhang zwischen den Phasensignalen $\alpha_1$ und dem eindeutigen Messwert Φ, beispielsweise einem Winkel oder einem Abstand, lautet somit

$$\alpha_i = \underset{1}{mod}\,(n_i \cdot \phi), \quad i = 1, ..., m \tag{I}$$

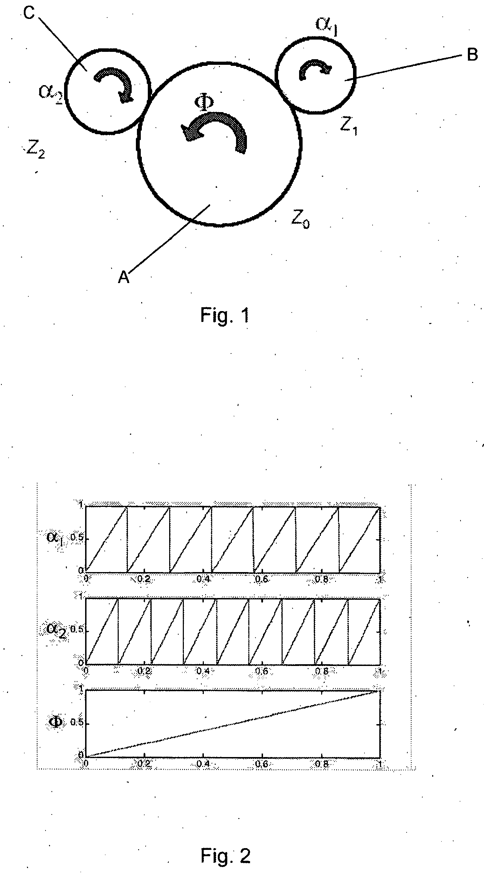

In der Gleichung (I) sind alle Signale so normiert, dass sie einen Wertebereich von 0 bis 1 durchlaufen. In Fig. 2 sind die Phasensignale $\alpha_1$ und $\alpha_2$ über dem Eindeutigkeitsbereich E für Φ = 0,...,1 dargestellt. In dem Beispiel in Fig. 2 sind die Periodenzahlen zu $n_1$ = 7 und $n_2$ = 9 gewählt.

Bei einigen Anwendungen sind die Periodizitäten in der Konzeptionsphase des Systems wählbar, in anderen Anwendungen sind die Periodizitäten fest vorgegeben. Dies kann beispielsweise bei der Interferometrie der Fall sein, wenn die Wellenlängen bzw. die Wellenlängenverhältnisse durch die physikalischen Randbedingungen festgelegt sind.

Beispiele für technische Systeme mit Phasensignalen sind:

- Entfernungsmessung mit RADAR oder moduliertem Laserlicht. Es werden $m$ Messungen mit verschiedenen Frequenzen $f_1$,..., $f_m$ durchgeführt. Die von einem Ziel im Abstand $x$ reflektierten Signale besitzen am Empfängerort die Phasenmesswerte

$$\alpha_i = \frac{2 \cdot \pi \cdot f_i \cdot 2 \cdot x}{c}$$

mit c = Lichtgeschwindigkeit. Durch Auflösen des linearen Gleichungssystems nach $\times$ ergibt sich der gewünschte Abstand $\times$. Die Phasen messwerte sind also der zu messenden Größe und der benutzten Frequenz proportional. Jedoch liegen die tatsächlichen Phasenmesswerte immer im Bereich 0 bis 2 $\pi$, sind also immer nur bis auf ganzzahlige Vielfache von 2 $\pi$ bestimmt. Bei normierter Darstellung liegen die Phasenmesswerte immer im Bereich von 0 bis 1 und sind auf ganzzahlige Vielfach von 1 beschränkt.

- Eindeutige Winkelmessung an einer Welle über mehrere Umdrehungen. Die Welle treibt, beispielsweise über Zahnräder, zwei weitere rotierende Elemente an, vgl. Figur 2. An diesen rotierenden Elementen sind Winkelsensoren angebracht. Die Winkelmesswerte dieser Sensoren sind die Phasensignale $\alpha_1$ bzw. $\alpha_2$. Durch geeignete Wahl der Zähnezahlen wird erreicht, dass mit der Anordnung der Winkel Φ der Welle eindeutig über mehrere Umdrehungen bestimmt werden kann. Dabei sind die Zahnzahlen so gewählt, dass sich die Anzahl der über dem Eindeutigkeitsbereich durchlaufenen Perioden der Phasensignale genau um 1 unterscheidet. Eine derartige Anordnung sowie ein Verfahren zur Bestimmung des Winkels Φ der Welle ist aus DE 195 06 938 A1 bekannt.

Ähnliche, als modifizierte Noniusverfahren bekannte Auswertverfahren sind aus DE 101 42 449 A1 und WO 03/004974 A1 bekannt.

Hierbei wird die gesuchte physikalische Größe durch Auswertung der Phasenmesswerte aus den Phasensignalen berechnet. Dabei ist es erforderlich, dass die Berechnung möglichst genau ist. Gleichzeitig sollen Messfehler in den Phasensignalen nicht sofort zu einem Versagen des Auswerteverfahrens führen.

Den bekannten Auswerteverfahren ist gemeinsam, dass sie Fehler in den Eingangssignalen bis zu einer von der jeweiligen Realisierung abhängigen Schranke tolerieren. Überschreiten die Fehler diese Schranke, so können große Fehler im Ausgangssignal auftreten. Die Auswerteverfahren arbeiten dann nicht mehr richtig.

Offenbarung der Erfindung und deren Vorteile:
Die Nachteile des Standes der Technik werden bei einem erfindungsgemäßen Noniusverfahren mit den Merkmalen des Anspruchs 1 vermieden, indem die Periodizitäten $n_i$ eine ganzzahlige Periodenzahl-Differenz

$$\Delta n = |n_i - n_{i-1}|$$

mit $\Delta n > 1$ aufweisen, wobei innerhalb eines reduzierten Eindeutigkeitsbereichs $E_{red}$ mit

$$E_{red} \approx \frac{1}{\Delta n} \cdot E$$

dem Wert T
durch eine Zuordnung gemäß

$$V = V(T) = \begin{cases} V_1 \, f\ddot{u}r \, T \geq T_{O1} \\ V_2 \, f\ddot{u}r \, T_{U2} \leq T < T_{O2} \\ V_3 \, f\ddot{u}r \, T_{U3} \leq T < T_{O3} \\ \quad \dots \\ V_k \, f\ddot{u}r \, T_{Uk} \leq T < T_{Ok} \end{cases}$$

$T_{Uk}$ für eine jeweilige untere Grenze und $T_{Ok}$ für eine jeweilige obere Grenze von T der Wert V zugeordnet wird, wobei die Zuordnungsintervalle

$$\Delta T = |T_{Ok} - T_{Uk}|$$

zwischen den oberen und den unteren Grenzen für T, sowie die Abstände $\Delta V = |V_{k+1} - V_k|$
zwischen benachbarten, verschiedenen um $\Delta T$ voneinander beabstandeten Werten T zugeordneten Werten $V_k$ mindestens der Periodenzahl-Differenz $\Delta n$ entsprechen, so dass durch die Zuordnung innerhalb des reduzierten Eindeutigkeitsbereichs $E_{red}$ eine um mindestens den Faktor $\Delta n$ gegenüber der Zuordnung innerhalb des Eindeutigkeitsbereichs E vervielfachte Fehlertoleranz für die Phasenmesswerte $\alpha_1$ zur Bestimmung der physikalischen Größe $\Phi$ erzielt wird. Für die Indizes $k$ der oberen und unteren Grenzen für T gilt dabei

$$k \in Z\{1, \dots, i\} \in N.$$

Kern der Erfindung ist, die als modifizierter Nonius bekannte Phasenauswertung zur eindeutigen Bestimmung einer physikalischen Größe $\Phi$ auch bei Systemen einsetzen zu können, die große Fehler in den Eingangssignalen aufweisen.

Sind die Periodizitäten durch das System oder die physikalischen Randbedingungen festgelegt, so erlaubt die Erfindung eine robustere Auswertung als mit den bekannten Verfahren. Die damit verbundene Verkleinerung des Eindeutigkeitsbereichs E auf einen reduzierten Eindeutigkeitsbereich $E_{red}$ kann dabei oft in Kauf genommen werden.

Das erfindungsgemäße Verfahren weist den Vorteil auf, dass die Robustheit gegenüber den aus dem Stand der Technik bekannten Auswerteverfahren um ein Vielfaches erhöht ist. Die Erhöhung der Robustheit des Auswerteverfahrens geschieht im Wesentlichen zu Lasten des Eindeutigkeitsbereichs E, der dabei auf einen reduzierten Eindeutigkeitsbereich $E_{red}$ verkleinert wird. Jedoch können im reduzierten Eindeutigkeitsbereich $E_{red}$ deutlich weitere Grenzen für die Zuordnung von V=V(T) $T_{Uk}$ und $T_{Ok}$ gewählt werden, wodurch die Fehlertoleranz für die Phasenmesswerte $\alpha_1$ vergrößert wird. Diese Grenzen sind typischerweise größer als die Periodenzahl-Differenz $\Delta n$ der Periodizitäten $n_1$. Mit Robustheit wird hier die Toleranz gegenüber Fehlern in den Phasensignalen bezeichnet. Diese ist um so größer, je größer die Fehler in den Phasensignalen sein dürfen, bei gleichzeitiger korrekter Funktion der Auswertung.

Weiterhin beinhaltet die Erfindung eine Schaltungsanordnung zur beschriebenen Auswertung von Phasensignalen, welche nur einen geringen Aufwand an Hard- und/oder Software benötigt.

Kurzbeschreibung der Zeichnung, in der zeigen:

Figur 1     eine schematische Darstellung einer Anordnung zur eindeutigen Messung des Drehwinkels $\Phi$ einer Welle durch Messung von Phasensignalen $\alpha_1$, $\alpha_2$ an durch die Welle angetriebenen Zahnrädern,

Figur 2     eine Darstellung des periodischen Verlaufs der Phasensignale $\alpha_1$, $\alpha_2$ mit den Periodizitäten $n_1$, $n_2$ über dem Drehwinkel $\phi$ der Welle,

Figur 3     ein Schaltbild einer Anordnung zur Signalauswertung nach dem Stand der Technik,

Figur 4     eine Darstellung des Verlaufs der aus den Phasensignalen und deren Periodizitäten aus Fig. 2 gebildeten Größe T,

Figur 5     eine Schaltungsanordnung zur Durchführung des erfindungsgemäßen Verfahrens, bei dem der Drehwinkel $\phi$ den Eindeutigkeitsbereich $E_{red}$ überschreiten darf,

Figur 6     eine Detailansicht einer Schaltungsanordnung zur Durchführung der erfindungsgemäßen, modifizierten Rundung aus Fig. 5, sowie

Figur 7     ein Schaltbild einer weiteren Schaltungsanordnung zur Durchführung des erfindungsgemäßen Verfahrens.

Wege zur Ausführung der Erfindung:

Die Beschreibung des Verfahrens erfolgt für Systeme mit zwei Phasensignalen $\alpha_1$ und $\alpha_2$. Eine Anwendung bei Systemen mit mehreren Phasensignalen $\alpha_i$ mit $1 \leq i \leq m$, also mit $m$ Dimensionen, ist prinzipiell möglich.

Voraussetzung für den Einsatz des erfindungsgemäßen Verfahrens ist eine ganzzahlige Periodenzahl-Differenz $\Delta n = |n_2 - n_1|$, deren Betrag größer als eins ist. Das heißt, es gilt

$$\Delta n = 2, 3, 4, 5, \ldots \, . \tag{II}$$

Der reduzierte Eindeutigkeitsbereich beträgt in normierter Darstellung etwa $1/\Delta n$. Dieser reduzierte Eindeutigkeitsbereich entspricht im Falle der Zwei-Wellenlängen-Interferometrie mit den beiden Wellenlängen $\lambda_1$ und $\lambda_2$ im wesentlichen der sogenannten synthetischen Wellenlänge $\Lambda$ mit

$$\Lambda = \frac{\lambda_1 \lambda_2}{|\lambda_1 - \lambda_2|} \, . $$

Als Beispiel zur Veranschaulichung des Verfahrens dient eine Anordnung mit Zahnrädern, wie in der Fig. 1 dargestellt. Die Zahnzahlen $Z_0$, $Z_1$ und $Z_2$ der Zahnräder A, B, C seien so gewählt, dass sich die Periodenzahlen $n_1 = 7$ und $n_2 = 9$ für die Phasenmesswerte $\alpha_1$, $\alpha_2$ ergeben. Der Eindeutigkeitsbereich $E$ des Drehwinkels $\Phi$ erstreckt sich dann typischerweise über mehrere Umdrehungen der das Zahnrad A tragenden Welle.

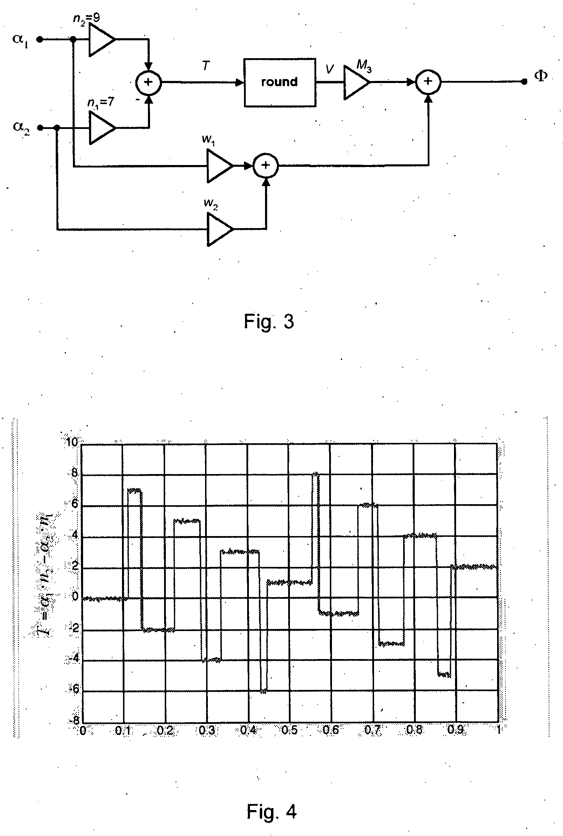

Fig. 3 zeigt eine typische Anordnung zur Signalauswertung nach den bekannten, im Stand der Technik angesprochenen Verfahren. Dabei wird aus den Phasenmesswerten $\alpha_1$ und $\alpha_2$ eine Größe $T$ in der Art

$$T = \alpha_1 \cdot n_2 - \alpha_2 \cdot n_1 \tag{III}$$

gebildet. Diese Größe T muss im Idealfall, also wenn $\alpha_1$ und $\alpha_2$ keinerlei Fehler enthalten, aufgrund von theoretischen Überlegungen ganzzahlig sein. In der Realität ist der Wert von $T$ im Allgemeinen nicht ganzzahlig und wird deshalb mit Hilfe einer Rundungsoperation

$$V = \text{round}(T) \, . \tag{IV}$$

auf einen ganzzahligen Wert $V$ abgebildet. Die Rundungsoperation in Gleichung (IV) liefert das gewünschte Ergebnis, solange die Fehler $e_1$ und $e_2$ in den Phasenmesswerten $\alpha_1$ und $\alpha_2$ kleiner als die Schranke $e_{max}$ sind. Für $e_{max}$ gilt

$$e_{max} = \frac{180°}{n_1 + n_2} \cdot \qquad \qquad \text{(V)}$$

Werden die Fehler größer, so ist eine korrekte Zuordnung der ganzen Zahl *V* zum Wert *T* nach der Gleichung (IV) nicht mehr sichergestellt.

Fig. 4 zeigt der Verlauf der Größe *T* nach Gleichung (III) über dem Winkel $\Phi$ für das Beispiel $n_1 = 7$, $n_2 = 9$ und $\Delta n = 2$.

Betrachtet man nun ein Fenster von $\Phi = 0,...,0.444$, so fällt auf, dass *V* nur die Werte -6, -4, -2, 0, 3, 5 und 7 annimmt. Der Abstand zwischen diesen Werten ist stets $\geq \Delta n$. Diese Eigenschaft nutzt das erfindungsgemäße Verfahren aus. Beschränkt man sich für die oben angegebenen Periodizitäten beispielsweise auf einen reduzierten Eindeutigkeitsbereich $E_{red}$ von

$$E_{red} \approx \left\{ \Phi = 0,...,\Phi = \frac{1}{2} \cdot \frac{n_2 - 1}{n_2} \right\}, \qquad \qquad \text{(VI)}$$

so kann eine einer modifizierte Rundung entsprechende Zuordnung verwendet werden, welche für *V* nur die oben genannten Werte zulässt. Das heißt, die Bestimmung von *V* aus *T* wird über die Zuordnung

$$V = \begin{cases} 7 & \text{für} & T \geq 6 \\ 5 & \text{für} & 4 \leq T < 6 \\ 3 & \text{für} & 1,5 \leq T < 4 \\ 0 & \text{für} & -1 \leq T < 1,5 \\ -2 & \text{für} & -3 \leq T < -1 \\ -4 & \text{für} & -5 \leq T < -3 \\ -6 & \text{für} & T < -5 \end{cases} \qquad \qquad \text{(VII)}$$

realisiert. Damit ist es nun möglich, eine korrekte Zuordnung der ganzen Zahl *V* zum Wert *T* zu garantieren, wenn die Fehler $e_1$ und $e_2$ in den Phasenmesswerten $\alpha_1$ und $\alpha_2$ die Schranke

$$e_{max} = 2 \cdot \frac{180°}{n_1 + n_2} \qquad \qquad \text{(VIII)}$$

nicht überschreiten. Diese Schranke ist gegenüber der in Gleichung (V) angegebenen Schranke um den Faktor $\Delta n = 2$ höher, womit das erfindungsgemäße Verfahren um den Faktor $\Delta n = 2$ robuster ist.

Ein analoges Vorgehen kann für $\Delta n = 3, 4, ...$ formuliert werden. Die Schranke für die zulässigen Fehler erhöht sich auf

$$e_{max} = \Delta n \cdot \frac{180°}{n_1 + n_2} , \qquad \qquad \text{(IX)}$$

der Eindeutigkeitsbereich reduziert sich auf etwa

$$E_{red} \approx \frac{E}{\Delta n} \cdot$$

Wichtig ist hierbei anzumerken, dass der reduzierte Eindeutigkeitsbereich $E_{red}$ mit

$$E_{red} = \left\{ \Phi \mid \Phi_{Ured} \leq \Phi \leq \Phi_{Ored} \right\},$$

mit den unteren und oberen Grenzen $\Phi_{Ured}$ und $\Phi_{Ored}$ des reduzierten Eindeutigkeitsbereichs $E_{red}$, ein Fenster mit beliebiger Lage innerhalb des Eindeutigkeitsbereichs

$$E = \left\{ \Phi \mid \Phi_U \leq \Phi \leq \Phi_O \right\},$$

mit den unteren und oberen Grenzen $\Phi_U$ und $\Phi_O$ des Eindeutigkeitsbereichs E, einnehmen kann, wobei für den Bereich $B_{Ered}$ des reduzierten Eindeutigkeitsbereichs $E_{red}$ gilt:

$$B_{E_{red}} = \left| \Phi_{Ored} - \Phi_{Ured} \right| \approx \frac{B_E}{\Delta n} = \frac{\left| \Phi_O - \Phi_U \right|}{\Delta n}.$$

Nach der Zuordnung von *V* zu *T* nach Gleichung (VII) erfolgt die Weiterverarbeitung von *V* zu dem gesuchten Drehwinkel $\Phi$. Die weiteren Schritte der Verarbeitung sind dann eine Multiplikation von *V* mit einem Faktor $M_3$, die Gewichtung der Phasenmesswerte und die Aufsummation von $M_3 \cdot V$ mit den gewichteten Phasenmesswerten $\alpha_1$ und $\alpha_2$:

$$\Phi = M_3 \cdot V + w_1 \cdot \alpha_1 + w_2 \cdot \alpha_2 . \qquad \qquad \textbf{(X)}$$

Für die Gewichtungsfaktoren $w_i$ gilt dabei

$$1 = \sum_{i=1}^{m} w_i \cdot n_i$$

und

$$w_i \approx \frac{1}{m \cdot n_i},$$

wobei die Gewichtungsfaktoren so gewählt werden, dass sie im in der Schaltungsanordnung verwendeten Binärsystem vollständig darstellbar sind. Vorzugsweise gilt dabei

$$w_i = \frac{1}{m \cdot n_i}$$

Vom Ergebnis der Gleichung (X) ist nur der nichtganzzahlige Anteil zu verwenden (modulo-Operation). Im betrachteten Beispiel können die Faktoren beispielsweise zu

$$M_3 = 0{,}4365 \qquad w_1 = 1/14 \qquad w_2 = 1/18$$

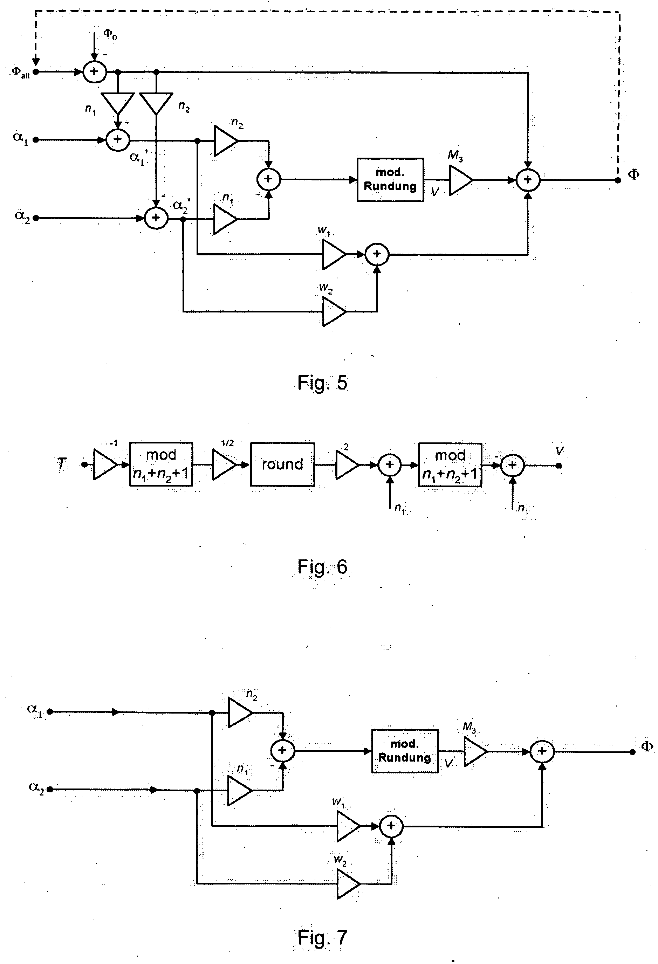

gewählt werden.
Eine Anordnung zur Durchführung des oben beschriebenen, erfindungsgemäßen Verfahrens ist in Fig. 7 gezeigt, wobei die Zuordnung von V mit V = V(T) mittels einer in Fig. 6 näher dargestellten Anordnung zur modifizierten Rundung erfolgt.

In einigen Fällen ist der reduzierte Eindeutigkeitsbereich $E_{red}$ nicht ausreichend. Dann kann das beschriebene Vorgehen durch Berücksichtigung des letzten Winkelwertes $\Phi_{alt}$ erweitert werden: Die Eingangswerte $\alpha_1$ und $\alpha_2$ werden so verändert, dass sie in den reduzierten Eindeutigkeitsbereich $E_{red}$ fallen. Nach der Auswertung wird diese Verschiebung wieder rückgängig gemacht.

$\Phi_0$ sei die Mitte des reduzierten Eindeutigkeitsbereichs $E_{red}$. Es gilt

$$\Phi_0 = \Phi_{Ured} + \frac{B_{E_{red}}}{2}.$$

Mit Hilfe der Abbildung

$$\alpha_1' = \alpha_1 - n_1 \cdot (\Phi_{alt} - \Phi_0) \qquad\qquad \text{(XI)}$$
$$\alpha_2' = \alpha_2 - n_2 \cdot (\Phi_{alt} - \Phi_0)$$

werden die Phasensignale so modifiziert, dass sie ihren Ursprung in der Mitte $\Phi_0$ des reduzierten Eindeutigkeitsbereichs haben. Anschließend erfolgt die Auswertung der Signale wie oben beschrieben. In einem letzten Schritt wird dann diese Verschiebung wieder rückgängig gemacht. Fig. 5 zeigt eine Anordnung zur Realisierung des beschriebenen Verfahrens mit einer Abbildung der Phasensignale auf den reduzierten Eindeutigkeitsbereich $E_{red}$. Auch hier erfolgt die Zuordnung von V mit V = V(T) mittels der in Fig. 6 näher dargestellten Anordnung zur modifizierten Rundung.

Damit wird sichergestellt, dass sich die tatsächlich physikalisch gemessenen Phasenmesswerte $\alpha_i$ stets in dem reduzierten Eindeutigkeitsbereich befinden, so dass die erhöhte Robustheit des erfindungsgemäßen Verfahrens ausgenutzt werden kann. Alternativ ist es auch möglich, die Zuordnungsvorschrift nach Gleichung (VII) an den letzten Winkelwert anzupassen.

Wichtig ist, dass es sich hier trotz der Einbeziehung des letzten Winkelwertes nicht um ein integrierendes Verfahren handelt. Das heißt, mögliche Fehler im Ausgangssignal $\Phi$ werden nicht aufintegriert.

Eine effektive Realisierung der Abbildung des Wertes $T$ auf $V$ kann mit Hilfe der in Fig. 6 dargestellten Anordnung erfolgen. Wird diese Anordnung im betrachteten Beispiel ($n_1 = 7$, $n_2 = 9$) bei einem reduzierten Eindeutigkeitsbereich

$$E_{red} = \left\{ \Phi \mid 0 \leq \Phi \leq 0{,}444 \right\}$$

eingesetzt, so ist für $\Phi_0$ mit Vorteil der Wert 0.222 einzusetzen.

Die physikalische Größe $\Phi$ ist dabei nicht auf einen Drehwinkel beschränkt, sondern kann auch einen Abstand oder dergleichen umfassen.

Gewerbliche Anwendbarkeit:

Die Erfindung ist insbesondere bei Aufgaben, bei denen aus mehreren Phasensignalen ein genauer und robuster Wert einer physikalischen Größe ermittelt werden muss, wie beispielsweise bei der Mehrfrequenzentfernungsmessung, der Drehwinkelmessung, oder der kombinierten Drehwinkel- und Drehmomentmessung, gewerblich anwendbar.

**Patentansprüche**

1. Modifiziertes Noniusverfahren zur eindeutigen Bestimmung einer physikalischen Größe $\Phi$ anhand von $m$ Phasenmesswerten $\alpha_i$ mit $1 \leq i \leq m$ und $m \geq 2$, wobei die Phasenmesswerte $\alpha_i$ innerhalb eines Eindeutigkeitsbereichs $E$ der physikalischen Größe $\Phi$, für welchen gilt

$$E = \left\{ \phi \mid \phi_u \leq \phi \leq \phi_o \right\},$$

mit den unteren und oberen Grenzen $\Phi_U$ und $\Phi_O$, voneinander verschiedene, ganzzahlige, Periodizitäten $n_i$ aufweisen, welche die Anzahl der durchlaufenen Perioden des Phasensignals im Eindeutigkeitsbereich E bezeichnen, wobei zunächst aus den Phasenmesswerten $\alpha_i$ sowie deren Periodizitäten $n_i$ ein Wert $T$ mit

$$T = T(\alpha_{j}, n_{l}) \text{ und } j,l \in Z\{1,...,m\}$$

in der Art

$$T = \alpha_1 \cdot n_2 - \alpha_2 \cdot n_1$$

berechnet wird, anschließend dem Wert $T$ ein Wert $V$ zugeordnet wird, und letztlich zur Bestimmung der physikalischen Größe $\Phi$ der Wert $V$ mit den Phasenmesswerten $\alpha_i$ gewichtet aufaddiert wird, **dadurch gekennzeichnet, dass** die Periodizitäten $n_i$ eine ganzzahlige Periodenzahl-Differenz

$$\Delta n = |n_l - n_{l-1}|$$

mit $\Delta n > 1$ aufweisen, wobei innerhalb eines reduzierten Eindeutigkeitsbereichs $E_{red}$ mit

$$E_{red} \approx \frac{1}{\Delta n} \cdot E$$

dem Wert T, wobei T mit Hilfe einer Rundungsoperation

$$V = \text{round}(T)$$

auf einen ganzzahligen Wert V abgebildet wird, durch eine Zuordnung gemäß

$$V = V(T) = \begin{cases} V_1 \text{ für } T_{O1} > T \geq T_{U1} \\ V_2 \text{ für } T_{U2} \leq T < T_{O2} \\ V_3 \text{ für } T_{U3} \leq T < T_{O3} \\ \qquad \cdots \\ V_k \text{ für } T_{Uk} \leq T < T_{Ok} \end{cases}$$

mit $T_{Uk}$ für eine jeweilige untere Grenze und $T_{Ok}$ für eine jeweilige obere Grenze von T der Wert $V$ zugeordnet wird, wobei die Grenzen $T_{Uk}$, $T_{Ok}$ der Zuordnung einer sich aus den Periodizitäten $n_i$ ergebenden modifizierten Rundung entsprechen, welche für V nur die genannten Werte zulässt, und die Zuordnungsintervalle

$$\Delta T = |T_{Ok} - T_{Uk}|$$

zwischen den oberen ($T_{Ok}$) und den unteren Grenzen ($T_{Uk}$) für T, sowie die Abstände

$$\Delta V = |V_{k+1} - V_k|$$

mindestens der Periodenzahl-Differenz $\Delta n$ entsprechen, wobei:

der Wert V=V(T) ganzzahlig ist ($V \in Z$) und vor dem Addieren mit den Phasenmesswerten $\alpha_i$ zur Bestimmung von $\Phi$ durch Multiplikation mit einem Gewichtungsfaktor ($M_3$) gewichtet wird, die Phasenmesswerte $\alpha_i$ vor der Addition zur Bestimmung von $\Phi$ durch Multiplikation mit jeweils einem eigenen Gewichtungsfaktor $w_i$ mit $1 \leq i \leq m$ gewichtet werden, und die Gewichtungsfaktoren $w_i$ zu

$$w_i = \frac{1}{m \cdot n_i}$$

mit

$$1 = \sum_{i=1}^{m} w_i \cdot n_i$$

gewählt werden, wobei für die gewichtete Aufsummation gilt:

$$\Phi = M_3 \ V + w_1 \ \alpha_1 + w_2 \ \alpha_2,$$

wobei zur Bestimmung der physikalischen Größe $\Phi$ zwei Phasenmesswerte $\alpha_1$ und $\alpha_2$ mit den Periodizitäten $n_1=7$ und $n_2=9$ im Eindeutigkeitsbereich E von $\Phi$ erfasst werden, wobei ein reduzierter Eindeutigkeitsbereich

$$E_{red} = 0,444 \cdot E$$

betrachtet wird und T berechnet wird zu

$$T(\alpha_j, n_i) = \alpha_1 \cdot n_2 - \alpha_2 \cdot n_1,$$

wobei innerhalb des reduzierten Eindeutigkeitsbereichs $E_{red}$

$$V = V(T) = \begin{cases} 7 \ f\ddot{u}r \ T \geq 6 \\ 5 \ f\ddot{u}r \ 4 \leq T < 6 \\ 3 \ f\ddot{u}r \ 1,5 \leq T < 4 \\ 0 \ f\ddot{u}r \ -1 \leq T < 1,5 \\ -2 \ f\ddot{u}r \ -3 \leq T < -1 \\ -4 \ f\ddot{u}r \ -5 \leq T < -3 \\ -6 \ f\ddot{u}r \ T < -5 \end{cases}$$

gilt und $\Phi$ berechnet wird zu

$$\Phi = M_3 \ V + w_1 \ \alpha_1 + w_2 \ \alpha_2$$

mit $M_3=0,4365$, $w_1 =1/14$ und $w_2 =1/18$.

2. Verfahren nach Anspruch 1, **dadurch gekennzeichnet, dass** der reduzierte Eindeutigkeitsbereich $E_{red}$ mit

$$E_{red} = \{\phi | \phi_{Ured} \leq \phi \leq \phi_{Ored}\}$$

ein Fenster mit beliebiger Lage innerhalb des Eindeutigkeitsbereichs

$$E = \{\phi | \phi_U \leq \phi \leq \phi_O\}$$

einnimmt, wobei für den Bereich des reduzierten Eindeutigkeitsbereichs gilt:

$$B_{E_{red}} = |\phi_{Ored} - \phi_{Ured}| \approx \frac{B_E}{\Delta n} = \frac{|\phi_O - \phi_U|}{\Delta n}.$$

3. Verfahren nach Anspruch 1 oder 2, **dadurch gekennzeichnet, dass** zur Bestimmung eines außerhalb des reduzierten Eindeutigkeitsbereichs $E_{red}$ liegenden Werts der physikalischen Größe $\Phi$ der letzte innerhalb des reduzierten Eindeutigkeitsbereichs $E_{red}$ liegenden Wert $\Phi_{alt}$ gespeichert wird, wobei von diesem Wert $\Phi_{alt}$ ein der Mitte des reduzierten Eindeutigkeitsbereichs $E_{red}$ entsprechender Wert $\Phi_0$ subtrahiert wird und die Differenz

$$\phi_{alt} - \phi_0$$

zur Modifikation der Phasenmesswerte gemäß

$$\alpha_i' = \alpha_i - n_i \cdot (\phi_{alt} - \phi_0)$$

verwendet wird, so dass die modifizierten Phasenmesswerten $\alpha_i'$ ihren Ursprung in der Mitte des reduzierten Eindeutigkeitsbereichs $E_{red}$ aufweisen, wobei anschließend der Wert T unter Verwendung der modifizierten Phasenwerte $\alpha_i'$ berechnet wird und dem Wert T der Wert V gemäß

$$V = V(T) = \begin{cases} V_1 \; f\ddot{u}r \; T \geq T_{O1} \\ V_2 \; f\ddot{u}r \; T_{U2} \leq T < T_{O2} \\ V_3 \; f\ddot{u}r \; T_{U3} \leq T < T_{O3} \\ \quad \cdots \\ V_k \; f\ddot{u}r \; T < T_{Uk} \end{cases}$$

zugeordnet wird und letztlich die gesuchte physikalische Größe $\Phi$ durch Addition der Phasenmesswerte $\alpha_i'$ mit V sowie der Differenz $\phi_{alt} - \phi_0$, zu

$$\Phi = M_3 \cdot V + (\phi_{alt} - \phi_0) + \sum_{i=1}^{m} w_i \cdot \alpha_i'$$

bestimmt wird.

4. Schaltungsanordnung zur Durchführung eines Verfahrens nach einem der vorhergehenden Ansprüche, **gekennzeichnet durch** Mittel zur Erfassung mindestens zweier innerhalb eines Eindeutigkeitsbereichs E einer zu bestimmenden physikalischen Größe $\Phi$ um eine Periodenzahl-Differenz $\Delta n$ größer 1 unterschiedliche, ganzzahlige Periodizitäten $n_i$ aufweisende Phasenmesswerte $\alpha_i$, Mittel zur Berechnung eines Werts T anhand der Phasenmesswerte $\alpha_i$, Mittel zur Zuordnung eines Werts V zu dem berechneten Wert T gemäß

$$V = V(T) = \begin{cases} V_1; \; f\ddot{u}r \; T \geq T_{O1} \\ V_2 \; f\ddot{u}r \; T_{U2} \leq T < T_{O2} \\ V_3 \; f\ddot{u}r \; T_{U3} \leq T < T_{O3} \\ \quad \cdots \\ V_k \; f\ddot{u}r \; T < T_{Uk} \end{cases}$$

mit $T_{Uk}$ für die jeweilige untere Grenze und $T_{Ok}$ für die jeweilige obere Grenze von T, wobei jeweils die Zuordnungsintervalle

$$\Delta T = |T_{Ok} - T_{Uk}|$$

zwischen den oberen ($T_{Ok}$) und den unteren Grenzen ($T_{Uk}$) für T, sowie die Abstände

$$\Delta V = |V_{k+1} - V_k|$$

mindestens der Periodenzahl-Differenz $\Delta_n$ entsprechen, sowie Mittel zur Addition der Phasenmesswerte $\alpha_i$ und des Werts V zur Bestimmung von $\Phi$,

wobei der Wert V=V(T) ganzzahlig ist ($V \in Z$) und vor dem Addieren mit den Phasenmesswerten $\alpha_i$ zur Bestimmung von $\Phi$ durch Multiplikation mit einem Gewichtungsfaktor ($M_3$) gewichtet wird, die Phasenmesswerte $\alpha_i$ vor der Addition zur Bestimmung von $\Phi$ durch Multiplikation mit jeweils einem eigenen Gewichtungsfaktor $w_i$ mit $1 \leq i \leq m$ gewichtet werden, und die Gewichtungsfaktoren $w_i$ zu

$$w_i = \frac{1}{m \cdot n_i}$$

mit

$$1 = \sum_{i=1}^{m} w_i \cdot n_i$$

gewählt werden,

wobei für die gewichtete Aufsummation gilt: $\Phi = M_3 V + w_1 \alpha_1 + w_2 \alpha_2$,
wobei zur Bestimmung der physikalischen Größe $\Phi$ zwei Phasenmesswerte $\alpha_1$ und $\alpha_2$ mit den Periodizitäten $n_i = 7$ und $n_2 = 9$ im Eindeutigkeitsbereich E von $\Phi$ erfasst werden,
wobei ein reduzierter Eindeutigkeitsbereich Ered = 0,444-E betrachtet wird und
T berechnet wird zu

$$T(\alpha_j, n_i) = \alpha_1 \cdot n_2 - \alpha_2 \cdot n_1,$$

wobei innerhalb des reduzierten Eindeutigkeitsbereichs $E_{red}$

$$V = V(T) = \begin{cases} 7 \; f\ddot{u}r \; T \geq 6 \\ 5 \; f\ddot{u}r \; 4 \leq T < 6 \\ 3 \; f\ddot{u}r \; 1,5 \leq T < 4 \\ 0 \; f\ddot{u}r -1 \leq T < 1,5 \\ -2 \; f\ddot{u}r -3 \leq T < -1 \\ -4 \; f\ddot{u}r -5 \leq T < -3 \\ -6 \; f\ddot{u}r \; T < -5 \end{cases}$$

gilt und $\Phi$ berechnet wird zu $\Phi = M_3 V + w_1 \alpha_1 + w_2 \alpha_2$ mit $M_3 = 0,4365$, $w_1 = 1/14$ und $w_2 = 1/18$.

**Claims**

1. Modified Vernier method for uniquely determining a physical variable $\Phi$ on the basis of $m$ phase measurement values $\alpha_i$ with $1 \leq i \leq m$ and $m \geq 2$, wherein the phase measurement values $\alpha_i$ have differing, integer periodicities $n_i$ within a uniqueness range $E$ of the physical variable $\Phi$, for which

$$E = \{\Phi \mid \Phi_U \leq \Phi \leq \Phi_O\}$$

applies, with the lower and upper limits $\Phi_U$ and $\Phi_O$, said periodicities denoting the number of elapsed periods of the phase signal in the uniqueness range E, wherein a value T with

$$T = T(\alpha_j, n_l) \quad \text{and} \quad j, l \in \mathbb{Z}\{1, \ldots, m\}$$

in the style of

$$T = \alpha_1 \cdot n_2 - \alpha_2 \cdot n_1$$

is initially calculated from the phase measurement values $\alpha_i$ and the periodicities $n_i$ thereof, a value $V$ is subsequently assigned to the value $T$, and ultimately there is a weighted addition of the value $V$ with the phase measurement values $\alpha_i$ for the purposes of determining the physical variable $\Phi$, **characterized in that** the periodicities $n_i$ have an integer period number difference

$$\Delta n = |n_i - n_{i-1}|$$

with Δ**n > 1,** wherein, within a reduced uniqueness range *Ered* with

$$E_{red} \approx \frac{1}{\Delta n} \cdot E,$$

the value *V* is assigned to the value *T* by an assignment according to

$$V = V(T) = \begin{cases} V_1 \text{ for } T_{O1} > T \geq T_{U1} \\ V_2 \text{ for } T_{U2} \leq T < T_{O2} \\ V_3 \text{ for } T_{U3} \leq T < T_{O3} \\ \quad \ldots \\ V_k \text{ for } T_{Uk} \leq T < T_{Ok} \end{cases}$$

with $T_{Uk}$ for a respective lower limit and $T_{Ok}$ for a respective upper limit of $T$, where $T$ is mapped to an integer value $V$ with the aid of a rounding operation

$$V = \text{round}(T),$$

wherein the limits $T_{Uk}$, $T_{Ok}$ of the assignment correspond to a modified rounding emerging from the periodicities $n_i$, which rounding admits only the aforementioned values for *V*, and the assignment intervals

$$\Delta T = |T_{Ok} - T_{Uk}|$$

between the upper ($T_{Ok}$) and lower limits ($T_{Uk}$) for T and the distances

$$\Delta V = |V_{k+1} - V_k|$$

correspond at least to the period number difference Δ**n,** wherein:
the value *V* = *V(T)* is an integer ($V \in \mathbb{Z}$) and is weighted by multiplication by a weighting factor (M₃) prior to the addition with the phase measurement values $\alpha_i$ for the purposes of determining $\Phi$,

the phase measurement values $\alpha_i$ are in each case weighted by multiplication by a dedicated weighting factor $w_i$ with $1 \le i \le m$ prior to the addition for determining $\Phi$, and the weighting factors $w_i$ are selected to be

$$w_i = \frac{1}{m \cdot n_i}$$

with

$$1 = \sum_{i=1}^{m} w_i \cdot n_i$$

where the following applies to the weighted summation:

$$\Phi = M_3 \ V + w_1 \ \alpha_1 + w_2 \ \alpha_2,$$

where, for the purposes of determining the physical variable $\Phi$, two phase measurement values $\alpha_1$ and $\alpha_2$ with periodicities $n_1 = 7$ and $n_2 = 9$ are captured in the uniqueness range E of $\Phi$, wherein a reduced uniqueness range

$$E_{red} = 0.444 \cdot E$$

is considered and $T$ is calculated as

$$T(\alpha_j, n_1) = \alpha_1 \cdot n_2 - \alpha_2 \cdot n_1,$$

where

$$V = V(T) = \begin{cases} 7 \text{ for } T \ge 6 \\ 5 \text{ for } 4 \le T < 6 \\ 3 \text{ for } 1.5 \le T < 4 \\ 0 \text{ for } -1 \le T < 1.5 \\ -2 \text{ for } -3 \le T < -1 \\ -4 \text{ for } -5 \le T < -3 \\ -6 \text{ for } T < -5 \end{cases}$$

applies within the reduced uniqueness range $E_{red}$ and $\Phi$ is calculated as

$$\Phi = M_3 \ V + w_1 \ \alpha_1 + w_2 \ \alpha_2,$$

with $M_3 = 0.4365$, $w_1 = 1/14$ and $w_2 = 1/18$.

2.   Method according to Claim 1, **characterized in that** the reduced uniqueness range $E_{red}$ with

$$E_{red} = \{ \Phi | \Phi_{Ured} \le \Phi \le \Phi_{Ored} \}$$

assumes a window with any position within the uniqueness range

$$E = \{ \Phi \mid \Phi_U \leq \Phi \leq \Phi_O \},$$

wherein the following applies to the range of the reduced uniqueness range:

$$B_{E_{red}} = |\Phi_{O red} - \Phi_{U red}| \approx \frac{B_E}{\Delta n} = \frac{|\Phi_O - \Phi_U|}{\Delta n}.$$

3. Method according to Claim 1 or 2, **characterized in that**, for the purposes of determining a value of the physical variable $\Phi$ lying outside of the reduced uniqueness range $E_{red}$, the last value $\Phi_{alt}$ lying within the reduced uniqueness range $E_{red}$ is stored, wherein a value $\Phi_0$ corresponding to the centre of the reduced uniqueness range $E_{red}$ is subtracted from this value $\Phi_{alt}$ and the difference

$$\Phi_{alt} - \Phi_0$$

is used to modify the phase measurement values according to

$$\alpha'_i = \alpha_i - n_i \cdot (\Phi_{alt} - \Phi_0)$$

such that the modified phase measurement values $\alpha'_i$ have their origin in the centre of the reduced uniqueness range $E_{red}$, wherein the value T is subsequently calculated using the modified phase values $\alpha'_i$ and the value $V$ is assigned to the value $T$ according to

$$V = V(T) = \begin{cases} V_1 \text{ for } T \geq T_{O1} \\ V_2 \text{ for } T_{U2} \leq T < T_{O2} \\ V_3 \text{ for } T_{U3} \leq T < T_{O3} \\ \qquad \cdots \\ V_k \text{ for } T < T_{Uk} \end{cases}$$

and, ultimately, the sought-after physical variable $\Phi$ is determined by adding the phase measurement values $\alpha'_i$ with $V$ and the difference $\Phi_{alt} - \Phi_0$ as

$$\Phi = M_3 \cdot V + (\Phi_{alt} - \Phi_0) + \sum_{i=1}^{m} w_i \cdot \alpha'_i .$$

4. Circuit arrangement for carrying out a method according to any one of the preceding claims, **characterized by** means for capturing at least two phase measurement values $\alpha_i$ within a uniqueness range $E$ of a physical variable $\Phi$ to be determined, said phase measurement values having integer periodicities $n_i$ that differ by a period number difference $\Delta n$ greater than 1, means for calculating a value $T$ on the basis of the phase measurement values $\alpha_i$, means for assigning a value $V$ to the calculated value $T$ according to

$$\begin{cases} V_1 ; for\ T \geq T_{O1} \\ V_2\, for\ T_{U2} \leq T < T_{O2} \\ V_3\, for\ T_{U3} \leq T < T_{O3} \\ \qquad \cdots \\ V_k\, for\ T < T_{Uk} \end{cases}$$

with $T_{Uk}$ for the respective lower limit and $T_{Ok}$ for the respective upper limit of $T$, wherein the assignment intervals

$$\Delta T = |T_{Ok} - T_{Uk}|$$

between the upper ($T_{Ok}$) and the lower limits ($T_{Uk}$) for $T$ and the distances

$$\Delta V = |V_{k+1} - V_k|$$

in each case correspond to at least the period number difference $\Delta n$, and means for adding the phase measurement values $\alpha_i$ and the value $V$ for determining $\Phi$, wherein the value $V = V(T)$ is an integer ($V \in \mathbb{Z}$) and is weighted by multiplication by a weighting factor ($M_3$) prior to the addition with the phase measurement values $\alpha_i$ for the purposes of determining $\Phi$,

the phase measurement values $\alpha_i$ are in each case weighted by multiplication by a dedicated weighting factor $w_i$ with $1 \leq i \leq m$ prior to the addition for determining $\Phi$, and the weighting factors $w_i$ are selected to be

$$w_i = \frac{1}{m \cdot n_i}$$

with

$$1 = \sum_{i=1}^{m} w_i \cdot n_i \quad ,$$

where the following applies to the weighted summation:

$$\Phi = M_3 \, V + w_1 \, \alpha_1 + w_2 \, \alpha_2,$$

where, for the purposes of determining the physical variable $\Phi$, two phase measurement values $\alpha_1$ and $\alpha_2$ with periodicities $n_1 = 7$ and $n_2 = 9$ are captured in the uniqueness range E of $\Phi$,
wherein a reduced uniqueness range

$$E_{red} = 0.444 \cdot E$$

is considered and $T$ is calculated as

$$T(\alpha_j, n_i) = \alpha_1 \cdot n_2 - \alpha_2 \cdot n_1,$$

where

$$V = V(T) = \begin{cases} 7 \text{ for } T \geq 6 \\ 5 \text{ for } 4 \leq T < 6 \\ 3 \text{ for } 1.5 \leq T < 4 \\ 0 \text{ for } -1 \leq T < 1.5 \\ -2 \text{ for } -3 \leq T < -1 \\ -4 \text{ for } -5 \leq T < -3 \\ -6 \text{ for } T < -5 \end{cases}$$

applies within the reduced uniqueness range $E_{red}$ and $\Phi$ is calculated as

$$\Phi \;=\; M_3\, V \;+\; w_1\, \alpha_1 \;+\; w_2\, \alpha_2,$$

with $M_3$ = 0.4365, $w_1$ = 1/14 and $w_2$ = 1/18.

## Revendications

1. Procédé Vernier modifié pour la détermination univoque d'une grandeur physique $\Phi$ au moyen de $m$ valeurs de mesure de phase $\alpha_i$ avec $1 \leq \mathbf{i} \leq \boldsymbol{m}$ et $\boldsymbol{m} \geq \mathbf{2}$, dans lequel, à l'intérieur d'une plage de précision E de la grandeur physique $\Phi$ pour laquelle s'applique

$$E = \{\Phi \,|\, \Phi_U \leq \Phi \leq \Phi_O\}$$

avec les bornes inférieures et supérieures $\Phi_u$ et $\Phi_o$, les valeurs de mesure de phase $\alpha_i$ comportent des périodicités $\boldsymbol{n_i}$ différentes l'une de l'autre et entières, lesquelles décrivent le nombre des cycles parcourant le signal de phase dans la plage de précision E, dans lequel une valeur T est ensuite calculée à partir des valeurs de phase $\alpha_i$ ainsi que de leurs périodicités $\boldsymbol{n_i}$ avec

$$T = T\big(\alpha_j, n_i\big) \quad et \quad j,l \,\in\, Z\{1,\ldots,m\}$$

sous la forme

$$T = \alpha_1 \cdot n_2 - \alpha_2 \cdot n_1$$

puis à la valeur T est ordonnée une valeur V, et enfin la valeur V est additionnée de manière pondérée aux valeurs de mesure de phase $\alpha_i$ afin de déterminer la grandeur physique $\Phi$, **caractérisé en ce que** les périodicités $\boldsymbol{n_i}$ comportent une différence de nombre de cycles entière

$$\Delta n = |n_i - n_{i-1}|$$

avec $\Delta\boldsymbol{n}$ **>1,** dans lequel à l'intérieur d'une plage de précision réduite $E_{red}$ avec

$$E_{red} \approx \frac{1}{\Delta n} \cdot E$$

la valeur T est attribuée à la valeur V, dans lequel T est affecté à l'aide d'une opération d'arrondi

$$V = round(T)$$

à une valeur V entière, au moyen d'une attribution selon

$$V = V(T) = \begin{cases} V_1 \; pour \; T_{O1} > T \geq T_{U1} \\ V_2 \; pour \; T_{U2} \leq T < T_{O2} \\ V_3 \; pour \; T_{U3} \leq T < T_{O3} \\ \qquad\qquad \ldots \\ V_k \; pour \; T_{Uk} \leq T < T_{Ok} \end{cases}$$

avec respectivement $\mathbf{T_{Uk}}$ en tant que borne inférieure et $\mathbf{T_{Ok}}$ en tant que borne supérieure de T, dans lequel les bornes $T_{Uk}$, $T_{Ok}$ correspondent à l'attribution d'un arrondi modifié résultant de la périodicité $n_i$, n'autorisant pour V que les valeurs nommées, et l'intervalle d'attribution

$$\Delta T = |T_{Ok} - T_{Uk}|$$

entre les bornes supérieure ($T_{Ok}$) et inférieure ($T_{Uk}$) pour T, ainsi que les écarts

$$\Delta V = |V_{k+1} - V_k|$$

correspondent au moins à la différence de nombre de cycles $\Delta n$, dans lequel :

la valeur $V = V(T)$ est entière ($V \in Z$) et est pondérée avant addition avec les valeurs de mesure de phase $\alpha_i$ pour détermination de $\Phi$ par multiplication avec un facteur de pondération ($M_3$),
les valeurs de mesure de phase $\alpha_i$ sont pondérées avant addition pour détermination de $\Phi$ par multiplication avec respectivement un facteur de pondération propre $w_i$ avec $1 \leq i \leq m$, et les facteurs de pondération $w_i$ sont choisis selon

$$w_i = \frac{1}{m \cdot n_i}$$

où

$$1 = \sum_{i=1}^{m} w_i \cdot n_i$$

dans lequel pour la totalisation pondérée s'applique :

$$\Phi = M_3 V + w_1 \alpha_1 + w_2 \alpha_2$$

dans lequel pour la détermination de la grandeur physique $\Phi$ deux valeurs de mesure de phase $\alpha_1$ et $\alpha_2$ sont saisies avec les périodicités $n_1 = 7$ et $n_2 = 9$ dans la plage d'exactitude E de $\Phi$, dans lequel une plage d'exactitude réduite
$E_{red} = 0,444 \cdot E$ est considérée et T est calculée par

$$T(\alpha_j, n_i) = \alpha_1 \cdot n_2 - \alpha_2 \cdot n_1 \text{,}$$

dans lequel à l'intérieur de la plage d'exactitude réduite $E_{red}$

$$V = V(T) = \begin{cases} 7 \ pour \ T \geq 6 \\ 5 \ pour \ 4 \leq T < 6 \\ 3 \ pour \ 1,5 \leq T < 4 \\ 0 \ pour -1 \leq T < 1,5 \\ -2 \ pour -3 \leq T < -1 \\ -4 \ pour -5 \leq T < -3 \\ -6 \ pour \ T < -5 \end{cases}$$

s'applique et $\Phi$ est calculée par

$$\Phi = M_3 V + w_1 \alpha_1 + w_2 \alpha_2$$

avec **M$_3$ = 0,4365,** $w_1$ = 1/14 et **$w_2$ = 1/18.**

**2.** Procédé selon la revendication 1, **caractérisé en ce que** la plage d'exactitude réduite **E$_{red}$** avec

$$E_{red} = \{\Phi | \Phi_{Ured} \leq \Phi \leq \Phi_{Ored}\}$$

occupe une fenêtre dotée d'une position préférée à l'intérieur de la plage d'exactitude

$$E = \{\Phi | \Phi_U \leq \Phi \leq \Phi_O\}$$

dans lequel pour l'intervalle de la plage d'exactitude réduite

$$B_{E_{red}} = |\Phi_{Ored} - \Phi_{Ured}| \approx \frac{B_E}{\Delta n} = \frac{|\Phi_O - \Phi_U|}{\Delta n}$$

s'applique.

**3.** Procédé selon la revendication 1 ou 2, **caractérisé en ce que** pour la détermination d'une valeur de la grandeur physique $\Phi$ située à l'extérieur de la plage d'exactitude réduite **E$_{red}$**, la dernière valeur $\Phi_{alt}$ située à l'intérieur de la plage d'exactitude réduite **E$_{red}$** est enregistrée, dans lequel à cette valeur $\Phi_{alt}$ est soustraite une valeur $\Phi_0$ correspondant au centre de la plage d'exactitude réduite **E$_{red}$** et la différence $\Phi_{alt}$ - $\Phi_0$ est utilisée pour la modification des valeurs de mesure de phase selon

$$\alpha_i' = \alpha_i - n_i \cdot (\Phi_{alt} - \Phi_0)$$

de sorte que les valeurs de mesure de phase modifiées $\alpha_i'$ aient leur origine au centre de la plage d'exactitude réduite E$_{red}$, la valeur T étant ensuite calculée en utilisant la valeurs de mesure de phase modifiée $\alpha_i'$ et la valeur V étant ordonnée à la valeur T selon

$$V = V(T) = \begin{cases} V_1 \; pour \; T \geq T_{O1} \\ V_2 \; pour \; T_{U2} \leq T < T_{O2} \\ V_3 \; pour \; T_{U3} \leq T < T_{O3} \\ \qquad \dots \\ V_k \; pour \; T < T_{Uk} \end{cases}$$

et enfin la grandeur physique recherchée $\Phi$ étant déterminée par addition des valeurs de mesure de phase $\alpha_i'$ avec V ainsi que la différence $\Phi_{alt}$ - $\Phi_0$ avec

$$\Phi = M_3 \cdot V + (\Phi_{alt} - \Phi_0) + \sum_{i=1}^{m} w_i \cdot \alpha_i' .$$

**4.** Circuit destiné à la mise en oeuvre d'un procédé selon une des revendications précédentes, **caractérisé par** un moyen de saisie d'au moins deux valeurs de mesure de phase $\alpha_i$ à l'intérieur d'une plage d'exactitude E d'une grandeur physique $\Phi$ à mesurer et comportant des périodicités $n_i$ entières et différentes autour d'une différence de nombre de cycles $\Delta n$ supérieure à 1, par un moyen de calcul d'une valeur T grâce aux valeurs de mesure de phase $\alpha_i$, par un moyen d'attribution d'une valeur V à la valeur T calculée selon

$$V = V(T) = \begin{cases} V_1 \ pour \ T \geq T_{O1} \\ V_2 \ pour \ T_{U2} \leq T < T_{O2} \\ V_3 \ pour \ T_{U3} \leq T < T_{O3} \\ \quad ... \\ V_k \ pour \ T < T_{Uk} \end{cases}$$

avec respectivement $T_{Uk}$ et $T_{Ok}$ comme bornes inférieure et supérieures pour T, dans lequel les intervalles d'attribution

$$\Delta T = |T_{Ok} - T_{Uk}|$$

entre les bornes supérieure ($T_{Ok}$) et inférieure ($T_{Uk}$) pour T, de même que les écarts

$$\Delta V = |V_{k+1} - V_k|$$

correspondent au moins à la différence de nombre de cycles $\Delta n$, de même que par un moyen d'addition des valeurs de mesure de phase $\alpha_i$ et de la valeur V pour la détermination de $\Phi$, dans lequel la valeur **V = V(T)** est entière (**V** $\in$ **Z**) et est pondérée avant addition avec les valeurs de mesure de phase $\alpha_i$ pour détermination de $\Phi$ par multiplication avec un facteur de pondération ($M_3$), les valeurs de mesure de phase $\alpha_i$ sont pondérées avant addition pour détermination de $\Phi$ par multiplication avec respectivement un facteur de pondération propre $w_i$ avec $1 \leq i \leq m$, et les facteurs de pondération $w_i$ sont choisis selon

$$w_i = \frac{1}{m \cdot n_i}$$

où

$$1 = \sum_{i=1}^{m} w_i \cdot n_i$$

dans lequel pour la totalisation pondérée

$$\Phi = M_3 V + w_1 \alpha_1 + w_2 \alpha_2$$

s'applique, dans lequel pour la détermination de la grandeur physique $\Phi$ deux valeurs de mesure de phase $\alpha_1$ et $\alpha_2$ sont saisies avec les périodicités $n_i$ = 7 et $n_2$ = 9 dans la plage d'exactitude E de $\Phi$, dans lequel une plage d'exactitude réduite $E_{red}$ = 0,444 · E est considérée et T est calculée par

$$T(\alpha_j, n_i) = \alpha_1 \cdot n_2 - \alpha_2 \cdot n_1$$

dans lequel à l'intérieur de la plage d'exactitude réduite $E_{red}$

$$V = V(T) = \begin{cases} 7 \; pour \; T \geq 6 \\ 5 \; pour \; 4 \leq T < 6 \\ 3 \; pour \; 1,5 \leq T < 4 \\ 0 \; pour -1 \leq T < 1,5 \\ -2 \; pour -3 \leq T < -1 \\ -4 \; pour -5 \leq T < -3 \\ -6 \; pour \; T < -5 \end{cases}$$

s'applique et $\Phi$ est calculée par $\Phi = M_3 V + w_1 \alpha_1 + w_2 \alpha_2$ avec $M_3 = 0,4365$, $w_1 = 1/14$ et $w_2 = 1/18$.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19506938 A1
- DE 10142449 A1

- WO 03004974 A1